# EUROPEAN PATENT SPECIFICATION

(11) **EP 0 841 211 B1**
(45) Date of publication and mention of the grant of the patent: **08.12.2004**
(21) Application number: 97203462.3
(22) Date of filing: 07.11.1997
(51) Int. Cl.: B60K 37/06

(54) **Operator seat sliding control console**
Gleitsteuerkonsole für einen Bedienungssitz
Console coulissante de commande pour un siège de conducteur.

(30) Priority: 12.11.1996 US 30498 P; 17.03.1997 US 820469
(43) Date of publication of application: 13.05.1998
(73) Proprietor: CNH Belgium N.V., 8210 Zedelgem (BE)
(72) Inventor: Stauffer, David B., New Holland, PA 17557 (US)
(74) Representative: Vandenbroucke, Alberic

(56) References cited:
- EP-A- 0 451 438
- EP-A- 0 658 458
- EP-A- 0 695 664
- US-A- 4 008 626
- US-A- 4 907 970
- US-A- 5 086 869

## Description

This invention relates to the improvement of the control console in the cab of an agricultural vehicle. More specifically it relates to a movable control console attached to the operator's seat.

Mechanical harvesting of grain has taken place for decades. However, efforts continue in the attempt to make harvesting operations more efficient and effective. A combine harvester generally includes a head which cuts the crop. The head then moves the cut crop into a feeder house. The feeder house lifts the cut crop into the threshing and separation areas of the combine. The grain is separated from the stalk by a rotor. The grain is then moved and stored in a grain tank. The chaff and trash are deposited from the rear of the combine. An operator usually runs these various operations from a glass-enclosed cab. Typically, a cab is located behind the head and in front of the threshing and separation areas of the combine. An operator can observe most of the combine activities from the cab. During harvesting periods it is not uncommon for the combine to be operated for an extended time. Sometimes a single operator will use a combine for 16 to 18 hours a day. Furthermore, several operators may alternate in the use of the combine. Therefore is it necessary to provide a cab which will allow maximum operator comfort and flexibility. This will permit the operator to remain mentally alert for the long time intervals needed to harvest crops. One aspect of maintaining the operator's alertness is to provide a control console that may be manipulated to a comfortable position. Equally important is to provide a control console which is located in a manner to allow an unobstructed view of the various combine operations. It would also be advantageous to provide a control console which would be suitable to different sized individuals. Finally it would be desirable to provide a control console that is easy to access for maintenance on the various control systems.

The effort to design and manufacture an acceptable control console for farm operations is considerable. The research effort has followed several paths. Because of the increasing number of control systems on a combine, the control console has grown in size, weight and complexity. The weight of the control console has typically forced the console to be mounted directly to the cab floor. From an ergonomic standpoint, this required a lot of movement on the operator's part. Also, depending on the location of the console, the operator's view of the farming operation could be restricted. Some effort to move the controls to an area near an arm rest has been undertaken. However, the quantity of controls on the console has resulted in several uncomfortable designs from an operator's standpoint. Important considerations in the design of a control console located at the side of the operator include such factors as operator view, the distance between the elbow height and hip pivot point and the distance between the elbow and fingertip. A design which would consider a range of operators from very large builds (so-called 95th percentile person) to very small builds (so-called 5th percentile person) would greatly improve the ease of use of a control console.

The prior art illustrates these and additional difficulties. US-A-4,055,230 discloses a vehicle control armrest in a vibration isolated control module. The armrest has a single pivot point and cannot be adjusted to reflect a different sized operator. Specifically, the distance from the operator's elbow to the control handle remains fixed. If a smaller or larger operator desired to use the control stick, the distance from the natural bend of their elbow to the control stick could not be easily adjusted. Furthermore, the general position of the operator's arm would have to remain relatively constant. Over a long period of time, such as during harvesting operations, this one position could become very uncomfortable. Furthermore, the weight of the console necessitates that the console be attached to the cab floor. Finally, maintenance access to the console is complex.

US-A-4,478,308 discloses an industrial vehicle having an adjustable and pivotal armrest. Similar to the above prior art, this device has a single pivot point which does not allow an adjustment to suit a variety of different sized individuals. Again the weight of the control console requires it be affixed to the cab floor and maintenance access is difficult

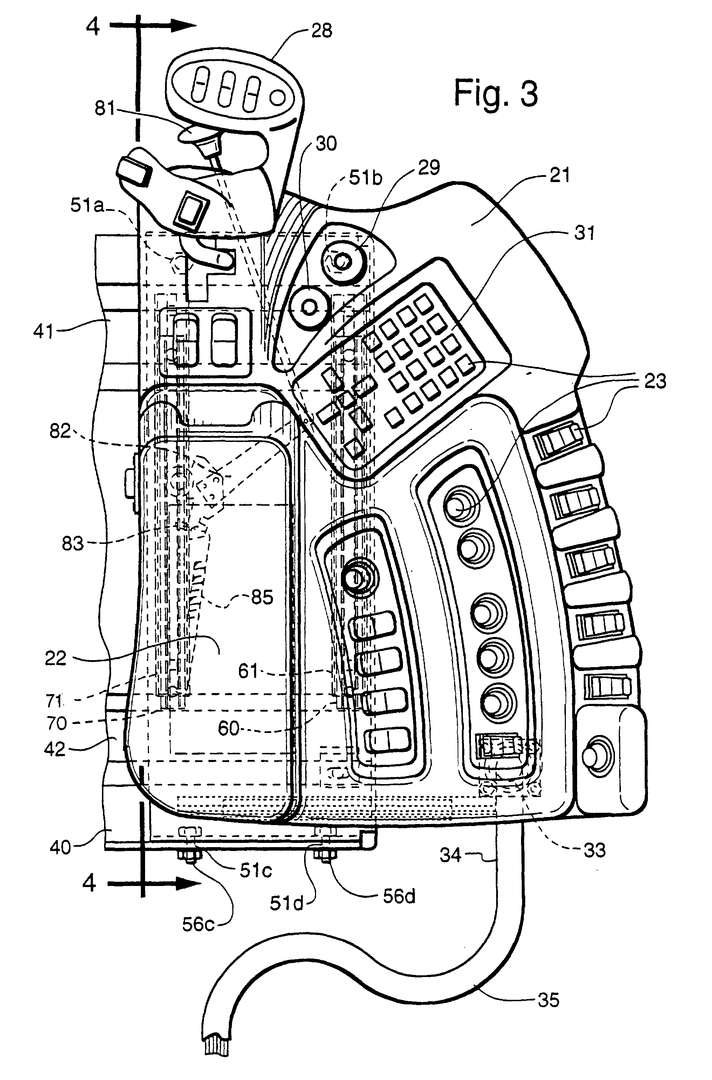

US-A-4,646,869 discloses an adjustable control console. Here the control console is imbedded into the chair and arm rest. An assembly illustrated in Figure 3 thereof allows the console to be pivoted about a fixed pivot. However, this again does not allow an adjustment to suit a variety of individuals. Finally, maintenance on such an assembly may be a difficult task.

US-A-4,702,520 discloses an adjustable armrest with integral vehicle controls. This document discloses a pivoting section containing the control equipment and an adjustable armrest. This device provides better support, but requires two separate adjusting mechanisms to comfortably adjust the armrest. Furthermore, because of the single pivot point, the amount of weight which can be placed on the armrest is limited. This, in turn, limits the number of controls which can be placed on the armrest. Finally, access for maintenance is limited.

US-A-5,409,080 discloses a shiftable control console for tractors. This console is attached directly to the floor. This results in a number of controls being placed on the console. However, if the operator adjusts the seat, then a corresponding adjustment must be made to the position of the console. Further, an armrest is provided as an attachment to the seat.

US-A-5,566,778 discloses a control assembly for operating an agricultural tractor. This control assembly has a single pivot about a horizontal bolt. The armrest can slide. However, because the assembly must be supported by a single pivot point, the weight (and consequently the number of controls) is limited. Further, the distance between the operator's hip and elbow are fixed. It would be desirable to be able to alter this distance for a variety of operator sizes or during a long working day.

Consequently, it is an object of the present invention to remedy to the need which exists for an operator seat sliding control console which will provide an unobstructed view of farming operations, will be easy to maintain and will be adjustable for a wide range of individuals.

According to the invention there is provided a control console assembly, comprising:
a chair support assembly for fixation to a cab floor;
an operator's seat affixed either directly or indirectly to said chair support assembly;
console support means affixed to said chair support assembly; and
a control console mounted to said console support means, said control console comprising a horizontal arm rest;
said chair support assembly being characterized in that said console support means comprise:
an inclined plate affixed either directly or indirectly to said chair support assembly; and
slide means affixed on the one hand to said inclined plate and on the other hand to said control console, thereby enabling sliding movement in an inclined longitudinal direction of said control console relative to said operator's seat while maintaining said arm rest in a horizontal position.

The said slide means may comprise at least one plate track affixed to said inclined plate and/or at least one console track affixed to said control console, thereby enabling sliding movement of the control console in the direction of said track or tracks.

The support means further may also comprise a support plate to which the operator's seat and the inclined plate are affixed, the support plate possibly having a series of channels for strengthening the support plate.

The movement of the sliding console preferably is controlled by a single release mechanism.

The inclination of the inclined plate may be at 10° and the range of sliding movement may be larger than 100 mm in order to accommodate a small individual as well as a large individual. This arrangement also provides to the operator a range of console positions from which he can choose to reduce operator fatigue.

The console may be wedge-shaped to accommodate a variety of controls without obstructing the operator's view. For easy access to the interior of the console and maintenance of the controls, the control console may be provided with a console hinge.

The inclined plate may be attached to the support plate by a plurality of bolts for easy removal of the console for repair. A harness plug which is remote from the inclined plate and to which the controls are connected by internal wires, enables movement of the wiring harness without damaging the electrical connections to the controls.

A control console in accordance with the present invention will now be described in further detail, by way of example, with reference to the following drawings, in which:
Figure 1 is a general view of a combine harvester combine with a cab containing a control console according to the present invention;
Figure 2 is an overhead view of the interior of the cab of Figure 1;
Figure 3 is an overhead view of the operator's console of Figure 2;
Figure 4 is a cut-away view taken along line 4-4 of Figure 3 indicating with phantom lines the sliding motion of the operator's console;
Figure 5 is a cut-away view, similar to Figure 4 and indicating with phantom lines the movement of the glove compartment and the console surface being raised;
Figure 6 is a cut-away view taken along line 6-6 of Figure 4 showing an overhead view of the release mechanism and harness plug;
Figure 7 is a cut-away view taken along line 7-7 of Figure 6 showing a side view of the console and plate tracks, the spring and the apertures;
Figure 8 is a cut-away view taken along line 8-8 of Figure 7 showing a view of the console and plate tracks and release mechanism; and
Figure 9 is a cut-away view taken along line 9-9 of Figure 6 showing a view of the harness plug, the phantom lines indicating the wire harness being removed from the harness plug.

In the following description, left and right references are used as a matter of convenience and are determined by standing at the rear of the combine and facing the forward end in the normal direction of travel. Likewise, forward and rearward are determined by normal direction of travel of the combine. Upward or downward orientations are relative to the ground or operating surface. Horizontal or vertical planes are also relative to ground.

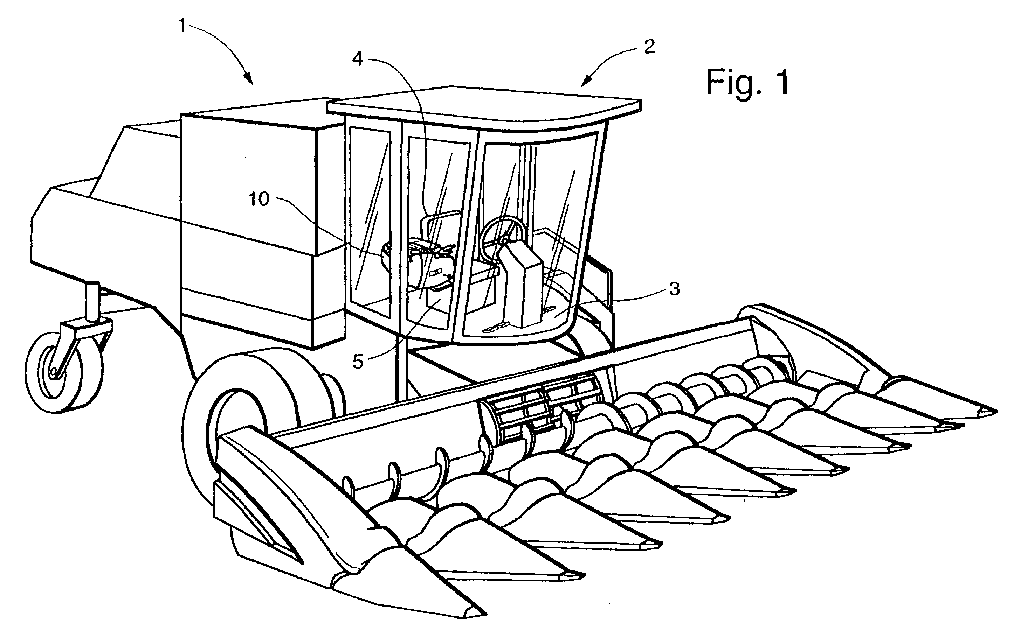

Figure 1 illustrates a typical combine 1, having a header for cutting a crop. As the combine 1 and header are moved forward, the grain and stalk are cut by the header. The header moves the grain into an auger trough. A transverse auger pushes the grain and stalk in the auger trough to the centre of the header. Located at the centre of the header is the feeder house or elevator. The feeder house moves the grain and stalks rearward into the threshing and separation systems of the combine 1. After processing and separation, the processed grain is stored in a grain tank located near the top of the combine 1. The trash or chaff is ejected from the rear of the combine 1. The operator runs the combine 1 from a cab 2 located behind the header and at the front of the combine. From the cab 2 the operator can observe most of the various combine functions. The cab 2 usually has a large glass window or several windows which afford the operator the maximum ability to monitor the header. Located in the centre of the cab is the steering wheel. Behind the steering wheel is an operator's chair 4. Located in close proximity to the operator's chair is the operator's console 10.

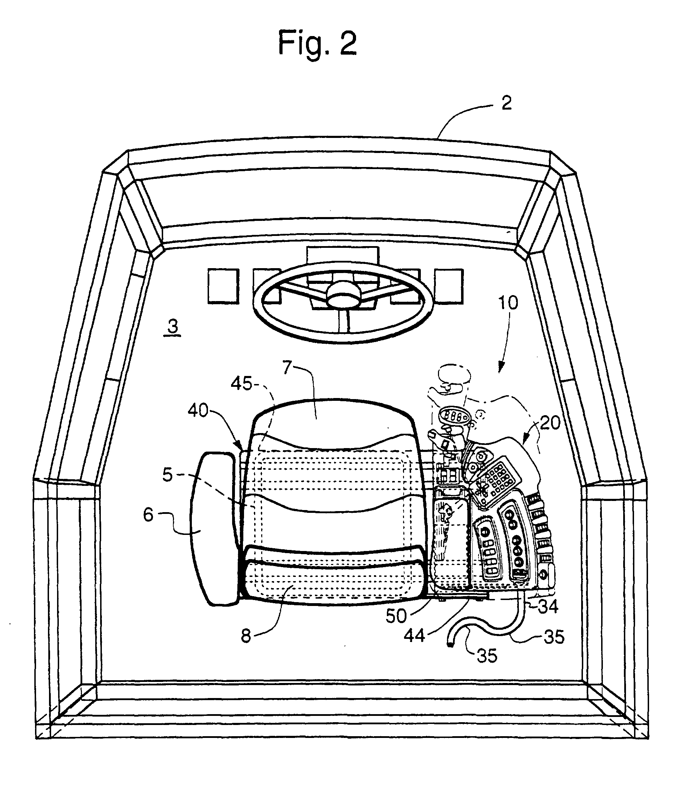

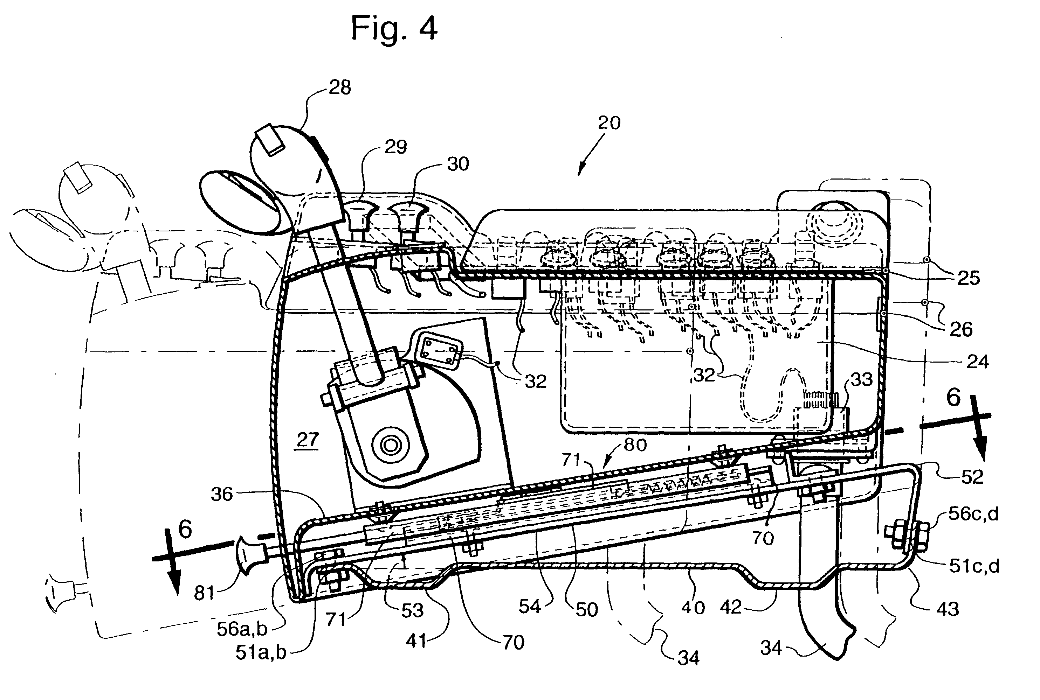

A general review of the major elements of the operator's chair 4 and the console 10 will be followed by a more detailed description later. The chair 4 comprises a the chair support assembly 5, affixed on the cab floor 3 behind the steering wheel (Figure 2). On the chair support assembly 5 is a support plate 40. Affixed on the support plate 40 is a seat 7. Also affixed to the support plate 40 is an inclined plate 50. A control console 20 slides along several tracks 60, 61, 70 and 71, mounted between the inclined plate 50 and the console 20 (Figures 3 and 4). Normally the control console 20 remains in a locked position. The operator allows the console 20 to move by manipulating a release mechanism 80 associated with the tracks 60, 61, 70 and 71.

The support plate 40 is attached to a conventional chair support assembly 5, which can be adjusted to suit the requirements of a particular operator. A conventional assembly 5 can move up or down, rearward or forward. The support plate 40 is generally rectangularly shaped and has several channels 41 and 42 in the plate 40 (Figure 3). The channels 41 and 42 extend from the left side to the right of the support plate 40. The channels 41 and 42 provide rigidity and strengthen the support plate 40, without the additional weight which could have deleterious effects on the operation of the chair support assembly 5. In the illustrated embodiment, there are two channels, the first channel 41 and the second channel 42. To further strengthen the support plate 40 without adding weight, a first bend 43 has been added to the rear edge of the support plate 40 (Figure 4). The support plate 40 is further divided into two portions, a left console portion 44 and a right seat portion 45 (Figure 2). The chair 4 with the seat 7, a seat back 8 and a left arm rest 6 is mounted to the support plate 40. The seat 7 is attached to the seat portion 45 of the support plate 40. An inclined plate 50 is attached to the console portion 44 of the support plate 40 (Figure 4).

The plate 50 has an upright bend 52 at its rear end to create a longitudinal angle 53 between the plate 50 and a horizontal surface, such as the support plate 40. The inclined plate 50 has four bolt holes 51a, 51b, 51c and 51d for bolting the inclined plate 50 to the support plate 40. The bolt holes 51 are positioned such that they can be easily reached for removal of the bolts. This would allow quick removal of the console 20 for maintenance of or repair to any controls. The inclined plate 50 has an inclined length 54.

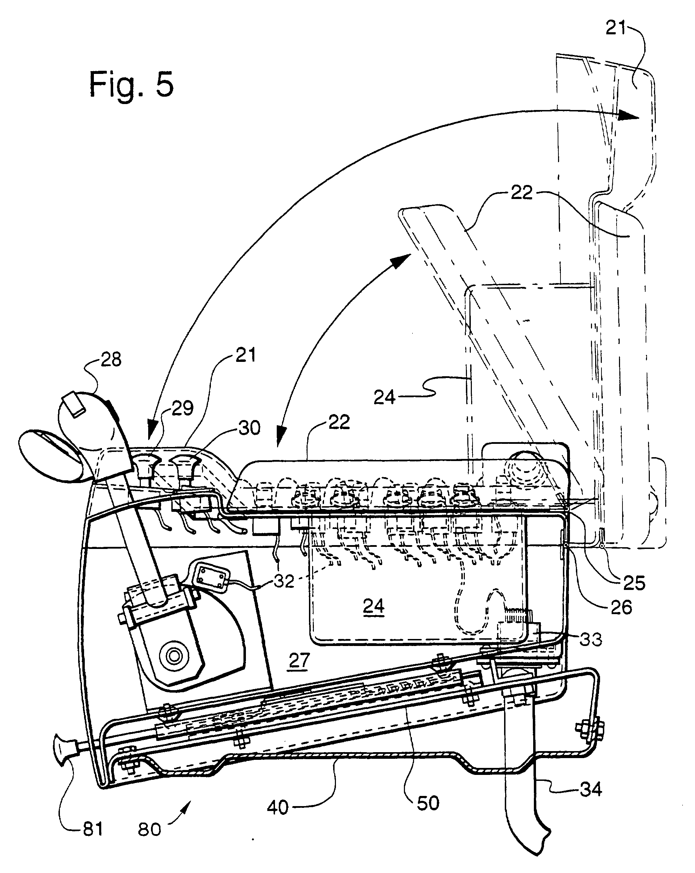

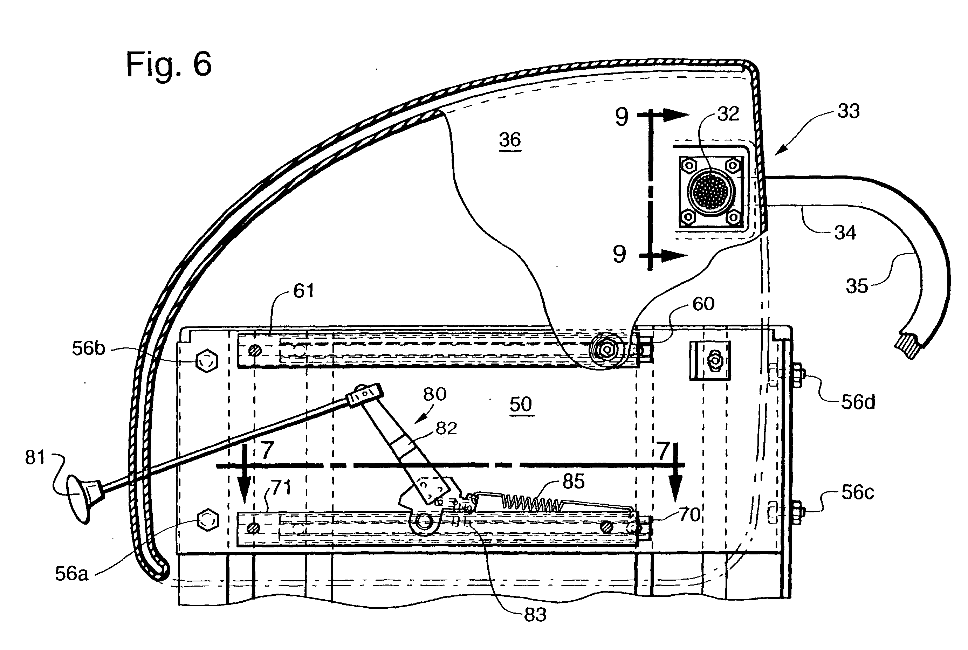

The control console 20 comprises a control surface 21 on which the controls 23 are placed (Figure 3). It also has a right arm rest 22 and a glove (or operator's manual) compartment 24, linked by a hinge 25 to the console 20. The controls 23 on the console 20 include the hydraulic control handle 28, a threshing rotor engage button 29, a header engage button 30 and an electronic monitor with a keyboard 31. The hydraulic control handle 28 is located forward of the right arm rest 22. The hydraulic control handle 28 controls the speed of the combine and lateral tilt of the header. A console hinge 26 (Figure 5) allows the control surface 21 to be lifted and the interior 27 of the console to be revealed. The console interior 27 contains internal wiring 32 which connects the various controls 23 to a wire harness 34. The internal wiring 32 connects to a harness plug 33. The harness plug 33 connects the interior 27 of the console to the base 36 of the console. The wire harness 34 can be attached to the harness plug 33. As shown in Figure 6, the harness plug 33 is positioned in the base 36 of the console towards the rear, right-side of the cab and also away from the inclined plate 50 and support plate 40. This location of the plug 33 is important so as to prevent the wire harness 34 from becoming twisted or compressed. Such twisting or compression could interfere with the wiring and detrimentally impact upon the control of the combine 1. The plug 33 is also positioned to allow for the wire harness 34 to have a bend 35. This insures that there is a sufficient amount of wire in the wire harness 34 when the console 20 moves.

Finally, the console 20 is generally wedge-shaped with the pinnacle of the wedge pointing forwardly. This avoids any obstructions and maximizes the operator's view.

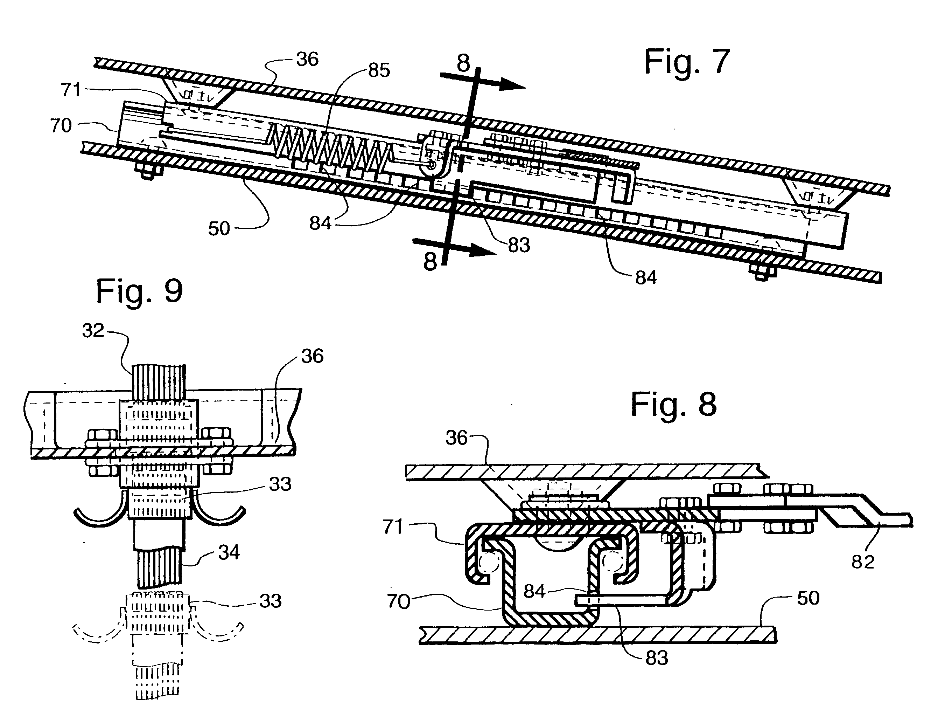

Connecting the console base 36 to the inclined length 54 of the inclined plate 50 are a series of tracks 60, 61, 70 and 71 (Figure 6). These tracks also support the console 20. In a preferred embodiment, there are two sets of tracks parallel to each other and generally oriented to the front and rear. This allows the console to move forward or rearward. The first plate track 60 and second plate track 70 are affixed to the inclined length 54 of the inclined plate 50. At least one of the plate tracks has several apertures 84 (Figures 7 and 8). The first plate track 60 is placed within the first console track 61. The second plate track 70 is inserted within the second console track 71. Each console track 61 or 71 is affixed to the console base 36. The plate track 60 or 70 is able to slide within the console track 61 or 71. The tracks 60, 61, 70 and 71 in conjunction with the support plate 40 allow a larger, heavier console to be supported by the chair support assembly 5. Previous designs were limited by the use of a pivot pin which could support much less weight and consequently could house fewer controls and adjustment mechanisms.

A release mechanism 80 controls the sliding between the plate tracks 60, 70 and the console tracks 61, 71. The release mechanism in the preferred embodiment comprises a triangularly shaped pivot plate 82 which is affixed to a console track 60. Attached to the pivot plate 82 is a handle 81 which projects to the front of the console 20. The pivot plate 82 is affixed to a ratchet 83 which is biased by a spring 85 to urge the ratchet 83 into an aperture 84 located in the plate track 60 or 70. When the operator moves the handle 81, the pivot plate 82 rotates and the ratchet 83 is withdrawn from the aperture 84. This allows the console tracks 61 and 71 to slide over the plate tracks 60 and 70. When the operator releases the handle 81, the pivot plate 82 is biased by the spring 85 and the ratchet 83 is inserted into an aperture 84 in the plate track. This safely secures the console 20 during farming operations.

The tracks between the inclined length 54 and the console base 36 enable variation of the position of the controls 23 according to the distance between the human elbow to the fingertip to accommodate a range of operators. SAE standard J833 specifies that to accommodate a fifth percentile person (very small build) to a ninety-fifth percentile person (very large build) the range should be at least 100 mm. Therefore the full range of slide movement of the console 20 is equal to or larger than this value. In a preferred embodiment this range is substantially equal to 150 mm. The amount of height variation from one end of the slide range to the other was chosen based on the SAE J833 elbow height to hip pivot distance. This resulted in a 10 degree longitudinal angle 53 between the inclined plate 50 and the horizontal support plate 40. This allows the control console 20 to be adjusted to accommodate a wide range of operators regardless of their own physical attributes. The console 20 may also be adjusted to alleviate fatigue by enabling an operator to easily adjust the console 20 at different times during the working day.

During normal operations, the operator will be seated in the chair 4 with the left arm operating the steering wheel and the right arm operating the hydraulic control handle 28 with their right elbow on the right arm rest 22. The operator can adjust the position of the console 20 by moving the handle 81 which allows the console 20 to slide forward and downward or backward and upward on the inclined plate 50. When maintenance or repairs are necessitated, access to the interior 27 of the console 20 can be gained by opening the control surface 21. The entire console 20 can be removed after unplugging the wire harness 34 from the wire plug 33. The four bolts 56a, 56b, 56c and 56d are then removed from the inclined plate 50 permitting the console to be detached.

It will be obvious to those skilled in the art that various changes may be made without departing from the scope of the invention as defined by the claims and the invention is not to be considered limited to what is illustrated in the drawings and described in the specification. For example, the console structure may advantageously be used in other types of agricultural or utility vehicles.

## Claims

1. A control console assembly, comprising:
a chair support assembly (5) for fixation to a cab floor (3);
an operator's seat (7) affixed either directly or indirectly to said chair support assembly (5);
console support means (40, 50, 60, 61, 70, 71) affixed to said chair support assembly (5); and
a control console (20) mounted to said console support means (40, 50, 60, 61, 70, 71), said console comprising a horizontal arm rest (22);
**characterized in that** said console support means (50, 60, 61, 70, 71) comprise:
an inclined plate (50) affixed either directly or indirectly to said chair support assembly (5); and
slide means (60, 61, 70, 71) affixed on the one hand to said inclined plate (50) and on the other hand to said control console (20), thereby enabling sliding movement of said control console (20) in an inclined longitudinal direction relative to said operator's seat (7) while maintaining said arm rest (22) in a horizontal position.

2. A control console assembly according to claim 1, **characterized in that** said slide means (60, 61, 70, 71) comprise at least one plate track (60/70) affixed to said inclined plate (50) and/or at least one console track (61/71) affixed to said control console (20), thereby enabling sliding movement of the control console (20) in the direction of said track or tracks (60, 61, 70, 71).

3. A control console assembly according to claim 2, **characterized in that** said slide means (60, 61, 70, 71) comprise at least on plate track (60/70), slideably connected to at least one console track (61/71).

4. A control console assembly according to any of the preceding claims, **characterized in that** said console support means (40, 50, 60, 61, 70, 71) comprise a support plate (40), having a seat region which is affixed to the chair support assembly (5) and supports said operator's seat (7), and a console region for attachment of said inclined plate (50) thereto.

5. A control console assembly according to claim 4, **characterized in that** said support plate (40) has a plurality of channels (41, 42) and/or a bend (43) for strengthening said support plate (40).

6. A control console assembly according to claim 4 or 5, **characterized in that** said inclined plate (50) is attached to said console region by a plurality of bolts (51).

7. A control console assembly according to any of the preceding claims, **characterized in that** said inclined plate (50) is inclined forwardly and downwardly at a longitudinal angle (53) substantially equal to 10 degrees to the horizontal.

8. A control console assembly according to any of the preceding claims, **characterized in that** said slide means (60, 61, 70, 71) enable sliding movement of said control console (20) over a longitudinal range of at least 100 mm.

9. A control console assembly according to any of the preceding claims, **characterized in that** it further comprises a release mechanism (80) pivotally attached to said slide means (60, 61, 70, 71) for enabling and halting said sliding movement of the control console (20).

10. A control console assembly according to claim 9, when appended to claim 3, **characterized in that**:
at least one said plate track (60/70) has a plurality of apertures (84) therein; and
the release mechanism (80) comprises a pivot plate (82) pivotally attached to said console track (61/71), said pivot plate (82) having a handle (81), a ratchet (83) and a spring (85), whereby the handle moves the ratchet (83) into one of said apertures (84).

11. A control console assembly according to any of the preceding claims, **characterized in that** said control console (20) is wedge-shaped so as to maximize an operator's view from the seat (7).

12. A control console assembly according to any of the preceding claims, **characterized in that** the console comprises an interior (27), a base (36) and a control surface (21) which comprises a hydraulic control handle (28), a rotor engage button (29), a header engage button (30), an electronic monitor (31) and a glove compartment (24), said glove compartment having a glove compartment hinge (25).

13. A control console assembly according to claim 12, **characterized in that** the hydraulic control handle (28), the rotor engage button (29), the header engage button (30), and the electronic monitor (31) are electrically connected to a harness plug (33) by a plurality of internal wires (32), said harness plug connecting the interior (27) to the base (36), whereby the harness plug (33) is remote from the inclined plate (50).

14. A control console assembly according to claim 12 or 13, **characterized in that** the control console (20) further comprises a console hinge (26), whereby access can be gained to the interior (27).

15. A control console assembly according to any of the preceding claims, **characterized in that** said operator's seat (7) has a seat back (8) and an arm rest (6) on the side opposite to the control console (20).

16. A cab of an agricultural or utility vehicle, **characterized in that** it comprises a control console assembly according to any of the preceding claims.

## Patentansprüche

1. Steuerkonsolen-Baugruppe, mit:
einer Sitz-Halterungsbaugruppe (5) zur Befestigung auf einem Kabinenboden (3);
einem Fahrersitz (7), der entweder direkt oder indirekt an der Sitz-Halterungsbaugruppe (5) befestigt ist;
Konsolen-Halterungseinrichtungen (40, 50, 60, 61, 70, 71), die an der Sitz-Halterungsbaugruppe (5) befestigt sind; und
eine Steuerkonsole (20), die an den Konsolen-Halterungseinrichtungen (40, 50, 60, 61, 70, 71) befestigt ist, wobei die Konsole eine horizontale Armlehne (22) umfasst;
**dadurch gekennzeichnet, dass** die Konsolen-Halterungseinrichtungen (50, 60, 61, 70, 71) Folgendes umfassen:
eine geneigte Platte (50), die entweder direkt oder indirekt an der Sitz-Halterungsbaugruppe (5) befestigt ist; und
Gleiteinrichtungen (60, 61, 70, 71), die einerseits an der geneigten Platte (50) und andererseits an der Steuerkonsole (20) befestigt sind, wodurch eine Gleitbewegung der Steuerkonsole (20) in einer geneigten Längsrichtung gegenüber dem Fahrersitz (7) ermöglicht wird, während die Armlehne (22) in einer horizontalen Position gehalten wird.

2. Steuerkonsolen-Baugruppe nach Anspruch 1, **dadurch gekennzeichnet, dass** die Gleiteinrichtungen (60, 61, 70, 71) zumindest eine Plattenführung (60/70), die an der geneigten Platte (50) befestigt ist und/oder zumindest eine Konsolen-Führung (61/71) umfassen, die an der Steuerkonsole (20) befestigt ist, wodurch eine Gleitbewegung der Steuerkonsole (20) in Richtung der Führung oder der Führungen (60, 61, 70, 71) ermöglicht wird.

3. Steuerkonsolen-Baugruppe nach Anspruch 2, **dadurch gekennzeichnet, dass** die Gleiteinrichtungen (60, 61, 70, 71) zumindest eine Plattenführung (60/70) umfassen, die gleitend mit zumindest einer Konsolen-Führung (61/71) verbunden ist.

4. Steuerkonsolen-Baugruppe nach einem der vorhergehenden Ansprüche, **dadurch gekennzeichnet, dass** die Konsolen-Halterungseinrichtungen (40, 50, 60, 61, 70, 71) eine Halterungsplatte (40) mit einem Sitzbereich, der an der Sitz-Halterungsbaugruppe (5) befestigt ist und den Fahrersitz (7) haltert, und einem Konsolenbereich zur Anbringung der geneigten Platte (50) an dieser umfassen.

5. Steuerkonsolen-Baugruppe nach Anspruch 4, **dadurch gekennzeichnet, dass** die Halterungsplatte (40) eine Anzahl von Kanälen (41, 42) und/oder eine Abbiegung (43) zur Versteifung der Halterungsplatte (40) aufweist.

6. Steuerkonsolen-Baugruppe nach Anspruch 4 oder 5, **dadurch gekennzeichnet, dass** die geneigte Platte (50) an dem Konsolenbereich durch eine Anzahl von Schrauben (51) angebracht ist.

7. Steuerkonsolen-Baugruppe nach einem der vorhergehenden Ansprüche, **dadurch gekennzeichnet, dass** die geneigte Platte (50) nach vome und nach unten unter einem Längswinkel (53) geneigt ist, der im Wesentlichen gleich 10° gegenüber der Horizontalen ist.

8. Steuerkonsolen-Baugruppe nach einem der vorhergehenden Ansprüche, **dadurch gekennzeichnet, dass** die Gleiteinrichtungen (60, 61, 70, 71) eine Gleitbewegung der Steuerkonsole (20) über einen Längsbereich von zumindest 100 mm ermöglichen.

9. Steuerkonsolen-Baugruppe nach einem der vorhergehenden Ansprüche, **dadurch gekennzeichnet, dass** sie weiterhin einen Freigabemechanismus (80) umfasst, der schwenkbar an den Gleiteinrichtungen (60, 61, 70, 71) befestigt ist, um die Gleitbewegung der Steuerkonsole (20) zu ermöglichen oder anzuhalten.

10. Steuerkonsolen-Baugruppe nach Anspruch 9, unter Rückbeziehung auf Anspruch 3, **dadurch gekennzeichnet, dass**:
zumindest eine der Plattenführungen (60/70) eine Anzahl von darin ausgebildeten Öffnungen (84) aufweist; und
der Freigabemechanismus (80) eine Schwenkplatte (82) umfasst, die schwenkbar an der Konsolen-Führung (61/71) befestigt ist, wobei die Schwenkplatte (82) einen Handgriff (81), eine Sperrklinke (83) und eine Feder (85) aufweist, wodurch der Handgriff die Sperrklinke (30) in eine der Öffnungen (84) bewegt.

11. Steuerkonsolen-Baugruppe nach einem der vorhergehenden Ansprüche, **dadurch gekennzeichnet, dass** die Steuerkonsole (20) keilförmig ist, um auf diese Weise das Blickfeld des Fahrers von dem Sitz (7) aus zu einem Maximum zu machen.

12. Steuerkonsolen-Baugruppe nach einem der vorhergehenden Ansprüche, **dadurch gekennzeichnet, dass** die Konsole einen Innenraum (27), eine Basis (36) und eine Steuerfläche (21) umfasst, die einen hydraulischen Steuerhandgriff (28), einen Rotor-Einschaltknopf (29), einen Vorsatzgeräte-Einschaltknopf (30), eine elektronische Überwachung (31) und ein Handschuhfach (24) umfasst, wobei das Handschuhfach ein Handschuhfach-Scharnier (25) aufweist.

13. Steuerkonsolen-Baugruppe nach Anspruch 12, **dadurch gekennzeichnet, dass** der hydraulische Steuerhandgriff (28), der Rotor-Einschaltknopf (29), der Vorsatzgeräte-Einschaltknopf (30) und die elektronische Überwachung (31) elektrisch mit einem Kabelbaum-Stecker (33) über eine Anzahl von innenliegenden Drähten (32) verbunden sind, wobei der Kabelbaum-Stecker das Innere (27) mit der Basis (36) verbindet, so dass sich der Kabelbaum-Stecker (33) entfernt von der geneigten Platte (50) befindet.

14. Steuerkonsolen-Baugruppe nach Anspruch 12 oder 13, **dadurch gekennzeichnet, dass** die Steuerkonsole (20) weiterhin ein Konsolenschamier (26) umfasst, wodurch ein Zugang an das Innere (27) erzielt werden kann.

15. Steuerkonsolen-Baugruppe nach einem der vorhergehenden Ansprüche, **dadurch gekennzeichnet, dass** der Fahrersitz (7) eine Rückenlehne (8) und eine Armlehne (6) auf der der Steuerkonsole (20) gegenüberliegenden Seite aufweist.

16. Kabine eines landwirtschaftlichen oder Nutzfahrzeuges, **dadurch gekennzeichnet, dass** sie eine Steuerkonsolen-Baugruppe nach einem der vorhergehenden Ansprüche umfasst.

## Revendications

1. Assemblage de console de commande, comprenant:
un assemblage de support de siège (5) destiné à la fixation au plancher de la cabine (3);
un siège d'opérateur (7) fixé soit directement, soit indirectement audit assemblage de support de siège (5);
des moyens de support de console (40, 50, 60, 61, 70, 71 ) fixés audit assemblage de support de siège (5); et
une console de commande (20) montée auxdits moyens de support de console (40, 50, 60, 61, 70, 71 ), ladite console de commande comprenant un accoudoir horizontal (22);
ledit assemblage de support de siège (40, 50, 60, 61, 70, 71 ) étant **caractérisé en ce que** les moyens de support de console comprennent:
une plaque inclinée (50) fixée soit directement, soit indirectement audit assemblage de support de siège (5); et
des moyens de coulissement (60, 61, 70, 71 ) d'une part sur ladite plaque inclinée (50) et d'autre part sur ladite console de commande (20) permettant ainsi un coulissement dans une direction longitudinale inclinée de ladite console de commande (20) par rapport audit siège d'opérateur (7), tout en maintenant ledit accoudoir (22) dans une position horizontale.

2. Assemblage de console de commande selon la revendication 1, **caractérisé en ce que** lesdits moyens de coulissement (60, 61, 70, 71) comprennent au moins un rail de plaque (60/70) fixé à ladite plaque inclinée (50) et/ou au moins un rail de console (61/71) fixé à ladite console de commande (20), en permettant ainsi un coulissement de la console de commande (20) dans le sens dudit rail ou desdits rails (60, 61,70,71).

3. Assemblage de console de commande selon la revendication 2, **caractérisé en ce que** lesdits moyens de coulissement (60, 61, 70, 71) comprennent au moins un rail de plaque (60/70), relié avec coulissement à au moins un rail de console (61/71).

4. Assemblage de console de commande selon l'une quelconque des revendications précédentes, **caractérisé en ce que** lesdits moyens de support de console (40, 50, 60, 61, 70, 71 ) comprennent une plaque de support (40) ayant une zone d'assise fixée à l'assemblage de support de siège (5) et supportant ledit siège d'opérateur (7), et une zone de console destinée à y fixer ladite plaque inclinée (50).

5. Assemblage de console de commande selon la revendication 4, **caractérisé en ce que** ladite plaque de support (40) possède une pluralité de canaux (41, 42) et/ou un pli (43) destiné à renforcer ladite plaque de support (40).

6. Assemblage de console de commande selon la revendication 4 ou 5, **caractérisé en ce que** ladite plaque inclinée (50) est fixée à ladite zone de console par une pluralité de boulons (51 ).

7. Assemblage de console de commande selon l'une quelconque des revendications précédentes, **caractérisé en ce que** ladite plaque inclinée (50) est inclinée vers l'avant et vers le bas suivant un angle longitudinal (53) substantiellement égal à 10 degrés par rapport à l'horizontale.

8. Assemblage de console de commande selon l'une quelconque des revendications précédentes, **caractérisé en ce que** lesdits moyens de coulissement (60, 61, 70, 71) permettent le coulissement de ladite console de commande (20) sur une portée longitudinale d'au moins 100 mm.

9. Assemblage de console de commande selon l'une quelconque des revendications précédentes, **caractérisé en ce qu'**il comprend en outre un mécanisme de dégagement (80) attaché avec pivotement auxdits moyens de coulissement (60, 61, 70, 71) afin d'autoriser ou d'empêcher ledit coulissement de la console de commande (20).

10. Assemblage de console de commande selon la revendication 9, lorsqu'elle se rapporte à la revendication 3, **caractérisé en ce que**:
au moins un desdits rails de plaque (60/70) possède une pluralité d'ouvertures (84) en son sein; et
le mécanisme de dégagement (80) comprend une plaque pivotante (82) attachée avec pivotement audit rail de console (61, 71 ), ladite plaque pivotante (82) possédant une poignée (81), un rochet (83) et un ressort (85), de telle sorte que la poignée déplace le rochet (83) dans une desdites ouvertures (84).

11. Assemblage de console de commande selon l'une quelconque des revendications précédentes, **caractérisé en ce que** ladite console de commande (20) possède une forme de coin afin de maximiser un champ de vison de l'opérateur à partir du siège (7).

12. Assemblage de console de commande selon l'une quelconque des revendications précédentes, **caractérisé en ce que** la console comprend un intérieur (27), une base (36) et une surface de commande (21) comportant une poignée de contrôle hydraulique (28), un bouton d'engagement de rotor (29), un bouton d'engagement de partie frontale (30), un moniteur électronique (31) et une boîte à gants (24), ladite boîte à gants possédant une charnière de boîte à gants (25).

13. Assemblage de console de commande selon la revendication 12, **caractérisé en ce que** la poignée de contrôle hydraulique (28), le bouton d'engagement de rotor (29), le bouton d'engagement de partie frontale (30) et le moniteur électronique (31) sont raccordés électriquement à une fiche de faisceau de câbles (33) par une pluralité de câbles internes (32), ladite fiche de faisceau de câbles connectant l'intérieur (27) à la base (36), de telle sorte que la fiche de faisceau de câbles (33) soit écartée de la plaque inclinée (50).

14. Assemblage de console de commande selon la revendication 12 ou 13, **caractérisé en ce que** la console de commande (20) comprend en outre une charnière de console (26) de telle sorte qu'un accès soit obtenu à l'intérieur (27).

15. Assemblage de console de commande selon l'une quelconque des revendications précédentes, **caractérisé en ce que** ledit siège d'opérateur (7) possède un dossier de siège (8) et un accoudoir (6) du côté opposé à la console de commande (20).

16. Cabine de véhicule agricole ou utilitaire, **caractérisé en ce qu'**elle comprend un assemblage de console de commande selon l'une quelconque des revendications précédentes.
